# EUROPEAN PATENT APPLICATION

(11) **EP 1 569 092 A2**
(43) Date of publication of application: **31.08.2005**
(21) Application number: 04023083.1
(22) Date of filing: 28.09.2004
(51) Int. Cl.: G06F 9/44

(54) **Multifunction apparatus and menu execution method**

(30) Priority: 08.01.2004 JP 2004003398
(71) Applicant: MATSUSHITA ELECTRIC INDUSTRIAL CO., LTD., Osaka 571-8501 (JP)
(72) Inventor: Osanai, Akira, Yokohama-shi Kanagawa 220-0062 (JP); Ozaki, Minoru, Kawanishi-shi Hyogo 666-0033 (JP); Kitajima, Ikuo, Tokyo 177-0031 (JP); Matsuzawa, Yukari, Tokyo 152-0011 (JP); Sakamoto, Masakiyo, Tokyo 146-0093 (JP)
(74) Representative: Grünecker, Kinkeldey, Stockmair & Schwanhäusser Anwaltssozietät

(57) **Abstract**

When a multifunction apparatus transmits a request for a menu to a network menu server, the network menu server transmits a network menu data table including functions provided in the multifunction apparatus and functions provided in the network menu server. When the network menu is displayed on a panel, a function can be selected from the panel of the multifunction apparatus. When the selected function is provided in the multifunction apparatus, the function is executed by the multifunction apparatus. When the selected function is provided in the network menu server, the function is executed by coordination of both the network menu server and the multifunction apparatus.

## Description

### BACKGROUND OF THE INVENTION

### 1. Field of the Invention

The present invention relates to a multifunction apparatus that executes a menu in coordination with a server. The invention also relates to a menu execution method for executing a menu displayed on the multifunction apparatus.

### 2. Description of Related Art

In recent years, many telephones, facsimile apparatuses, multifunction apparatuses, and other information apparatuses have a display (includes a touch panel input apparatus) that displays information for users and an operation screen that enables the users to input the instructions for an operation.

For example, in case of a multifunction apparatus having printer, facsimile, and copier functions, a menu naming these functions is displayed on an operation screen. When the user selects a desired function name, the selected function is executed (e.g., Related Art 1).

An apparatus that registers menus has been also introduced. Employing such an apparatus, the user can create a menu screen that minimizes the number of operations to reach a desired menu item, and store such a menu screen (e.g., Related Art 2).
**[Related Art 1]** Japanese Patent Application Laid Open H06-276337
**[Related Art 2]** Japanese Patent Application Laid Open H09-54668 (Paragraph 0018, Fig. 1)

However, the above described art lacks in flexibility of the system (e.g., function enhancement), because all the menus are stored in the multifunction apparatus. In particular, when a function to be executed by the multifunction apparatus is enhanced, a new menu display program needs to be stored in the ROM of the multifunction apparatus. In addition, even when the multifunction apparatus is connected to a network, the multifunction apparatus can specify a function that is provided in the multifunction apparatus only, which limits the function enhancement.

### SUMMARY OF THE INVENTION

The present invention addresses the above described problems. The purpose of the invention is to provide a multifunction apparatus and a menu execution method that have the flexibility in the function enhancement and does not require storing the menu display program in the ROM, and that can select and execute a function displayed in a menu, even when the function is not installed in the apparatus.

In the present invention, a multifunction apparatus obtains a network menu that includes functions provided in the multifunction apparatus and functions provided in a server, the menu being used to select a function in a server from the multifunction apparatus. The obtained menu is displayed on a panel of the multifunction apparatus. When a function is selected from the displayed menu, it is determined whether the function is provided in the multifunction apparatus. When it is provided, the multifunction apparatus executes the function. When it is not provided, a function execution request is made and transmitted to the server.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 is a system configuration illustrating an embodiment of the present invention;
Fig. 2 is a functional block diagram illustrating a multifunction apparatus used in the embodiment;
Fig. 3 is a functional block diagram of a network menu server used in the embodiment;
Fig. 4 is a flowchart illustrating an initialization process of an apparatus function management controller of the multifunction apparatus of Fig. 2;
Fig. 5 illustrates a configuration of an apparatus function management table;
Fig. 6 is a flowchart illustrating an initialization process of a network menu controller of the multifunction apparatus of Fig. 2;
Fig. 7 illustrates a configuration of a network menu data table;
Fig. 8 is a flowchart illustrating an initialization process of a server function management controller at the network menu server of Fig. 3;
Fig. 9 illustrates a configuration of a server function management table;
Fig. 10 is a flowchart illustrating a panel controller of the multifunction apparatus of Fig. 2;
Fig. 11 illustrates a display example of a network menu;
Fig. 12 is a flowchart illustrating a process after the server function management controller at the network menu server of Fig. 3 receives a function execution request.
Fig. 13 is a flowchart illustrating a process after the multifunction apparatus of Fig. 2 receives a function management tag number;
Fig. 14 illustrates a configuration of a network scanner data; and
Fig. 15 is a flowchart illustrating a process after the network menu server receives the network scanner data.

### DETAILED DESCRIPTION OF PREFERRED EMBODIMENTS

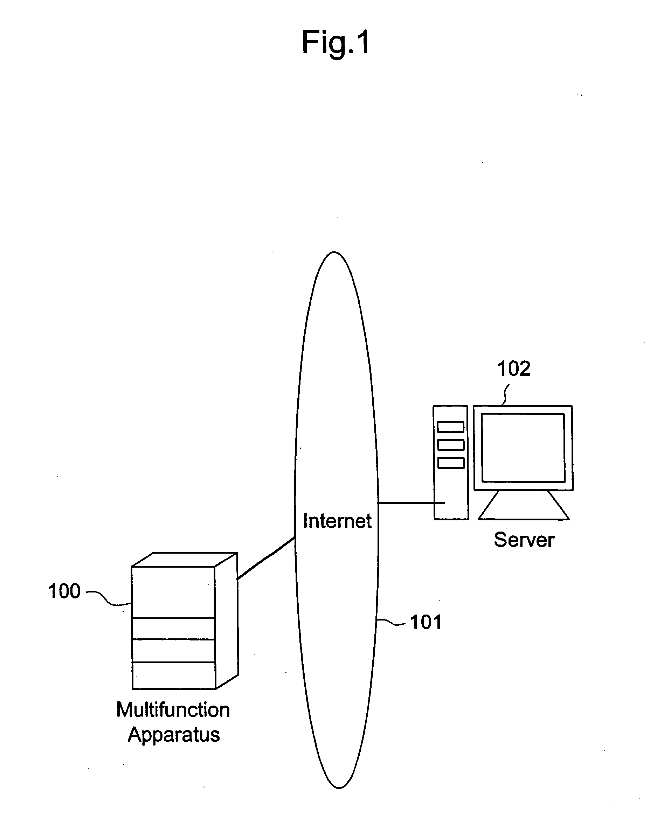

The embodiments of the present invention are explained in the following, in reference to the above-described drawings. Fig. 1 illustrates a network configuration of an embodiment of the present invention. Multifunction apparatus 100 is connected to network menu server 102 via Internet 101. The data communication network that connects multifunction apparatus 100 and network menu server 102 is not limited to the Internet. Other types of network such as LAN can be used for the data communication network.

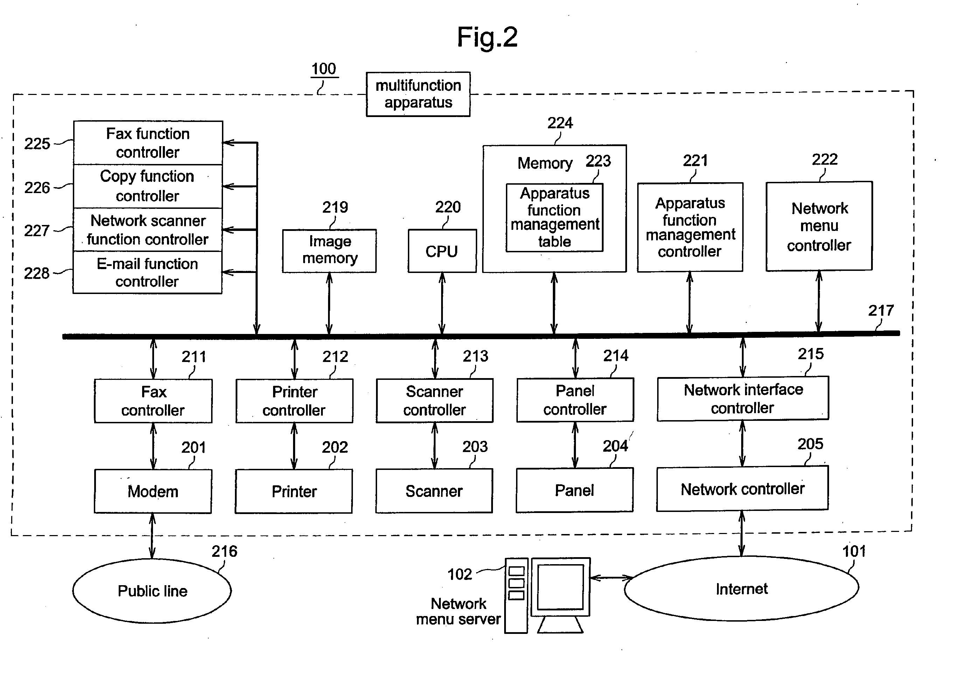

Fig. 2 illustrates a configuration of multifunction apparatus 100. Multifunction apparatus 100 is provided with modem 201 that performs facsimile communication, printer 202 that outputs a printed document, scanner 203 that scans a document, panel 204 that displays an operation screen and detects an input, and network controller 205 that connects to the network. Controllers 211 - 215 control operations of components 201 - 205 respectively. In particular, fax controller 211 gives a command for facsimile communication to modem 201. Printer controller 212 gives a print data to printer 202, the print data being converted to a predetermined format. Scanner controller 213 enables scanner 203 to scan a document and transmits the scanned data. Panel controller 214 displays a menu in an operation screen on panel 204 and transmits input data from panel 204. Network interface controller 215 retrieves data from network controller 205 and transmits transmission data from network controller 205 to Internet 101. Modem 201 is connected to public line 216. Multifunction apparatus is also provided with image memory 219.

The above controllers 211 - 215 are connected to bus 217, on which CPU 220 is connected. CPU 220 manages the operation of multifunction apparatus 100. Apparatus function management controller 221 and network menu controller 222 are located on bus 217. Apparatus function management controller 221 collects functions installed in multifunction apparatus 100 and registers the function data in apparatus function management table 223. Apparatus function management table 223 uses a work area of memory 224. Network menu controller 222 gives a network menu (obtained from network menu server 102) to panel controller 214 so that panel controller 214 can display the network menu.

Fax function controller 225 is a program that controls a facsimile function, while copy function controller 226 controls a copy function. Network scanner function controller 227 is a program that controls a network scanner function, while e-mail function controller 228 is a program that controls an e-mail function. By starting these programs 225 - 228 and operating necessary controllers and hardware, the fax function, copy function, network scanner function, and e-mail function become available. Multifunction apparatus 100 is not limited to having all of the above functions. Multifunction apparatus 100 can be provided with other functions.

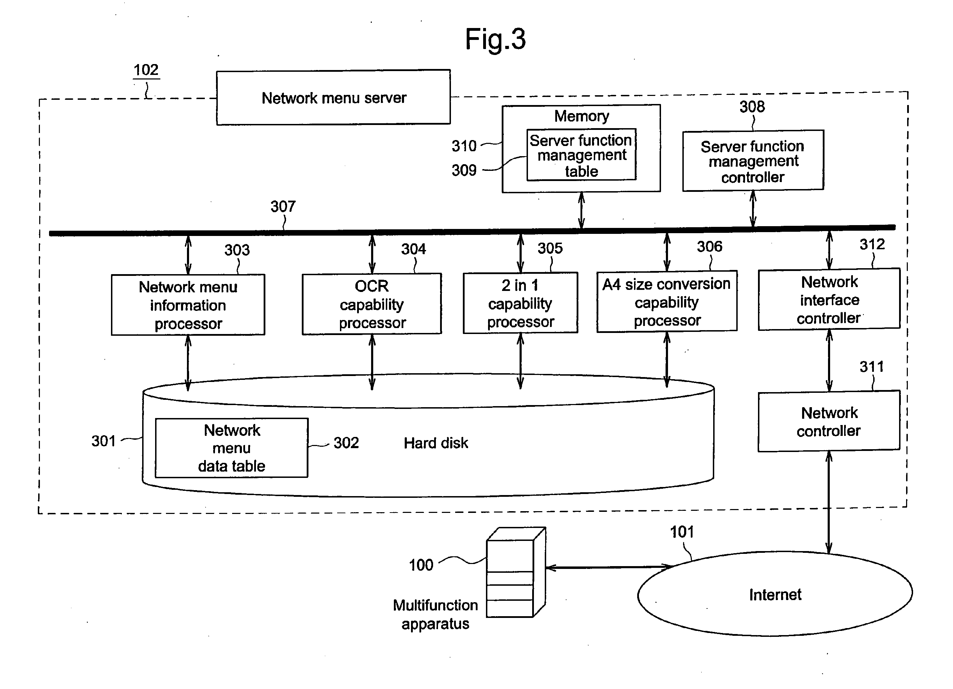

Fig. 3 illustrates a configuration of network menu server 102. Hard disk 301 stores network menu data table 302. Network menu data table 302 registers above described functions (provided in multifunction apparatus 100) as well as functions provided by coordination of both multifunction apparatus 100 and network menu server 102. Network menu information processor 303 reads and updates network menu data table 302.

In addition, network menu server 102 is provided with OCR capability processor 304, 2-in-1 capability processor 305, and A4 size conversion capability processor 306. OCR capability processor 304 is a functional block that recognizes characters from image data (scanned document data) and converts them into character codes. 2-in-1 capability processor 305 is a functional block that edits 2 page document into 1 page. A4 size conversion capability processor 306 is a functional block that converts a document (B4 and A3) scanned by multifunction apparatus 100 into A4 size, when printer 202 only has an A4 output function. In the present embodiment, the above described capabilities are not provided in multifunction apparatus 100.

Server function management controller 308 is located on bus 307 to which the above processors 303-306 are connected. Server function management controller 308 detects functions provided in network menu server 102 (OCR capability, 2-in-1 capability, and A4 size conversion capability) and registers the data in server function management table 309. Server function management table 309 uses a work area in memory 310.

Network menu server 102 is connected to Internet 101 via network controller 311. Network controller 311 is controlled by network interface controller 312, which is located on bus 307.

The following describes operations of multifunction apparatus 100 and network menu server 102 having the above configurations.

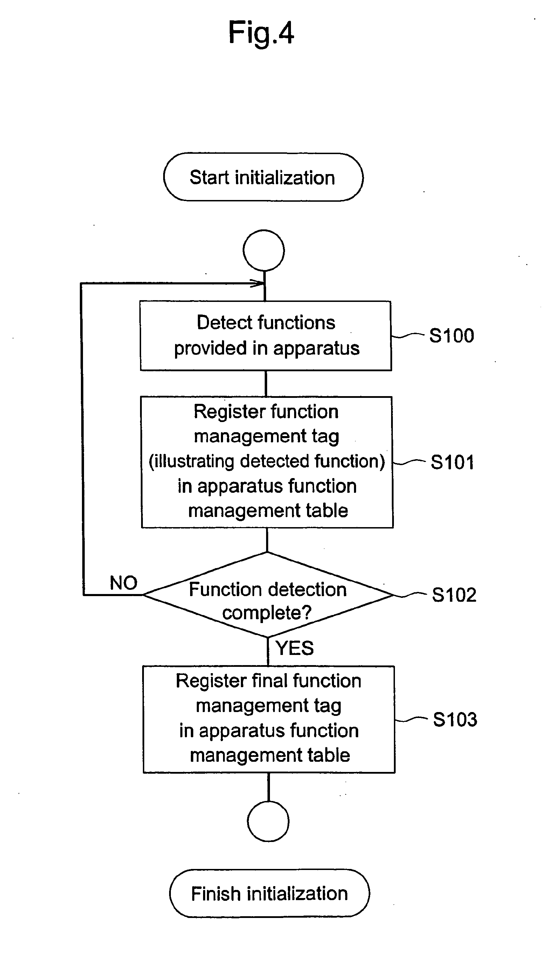

According to the flowchart of Fig. 4, multifunction apparatus 100 executes a process of registering provided functions (provided in multifunction apparatus 100) in apparatus function management table 223. First, apparatus function management controller 221 checks the function controllers (225 - 228) to detect the provided functions (S100). The detected provided functions are registered in apparatus function management table 223 (S101). When all functions provided in multifunction apparatus 100 are registered (S102), a final function management tag is registered at the end of apparatus function management table 223 to complete the initialization process (S103).

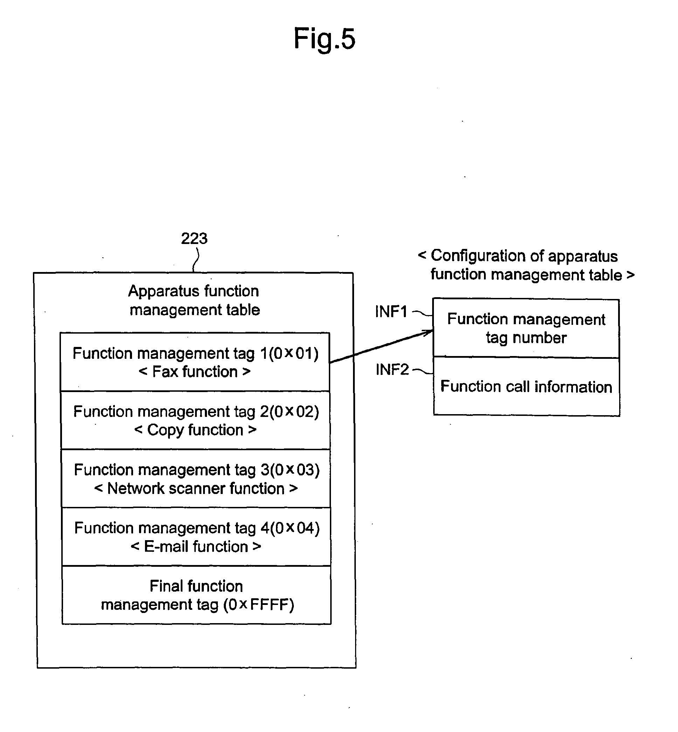

Fig. 5 illustrates a configuration of apparatus function management table 223. As shown in Fig. 5, fax, copy, network scanner, and e-mail functions are registered from the initialization process of Fig. 4. In Fig. 5, function management tag number INF1 and function call information INF2 are registered for each function.

Function management tab number INF1 is identification information for identifying functions, the number being the same for each function and shared by multifunction apparatus 100 and network menu server 102.

Function call information INF2 is information to be used to execute the corresponding function. When function is provided as a mathematical function, the function is configured with a mathematical function address. When the function is provided as a task, the function is configured with a task number and a function execution command. The format of function call information INF2 is dependent on how the functions are provided. Therefore, other formats can be used for function call information INF2 in this invention.

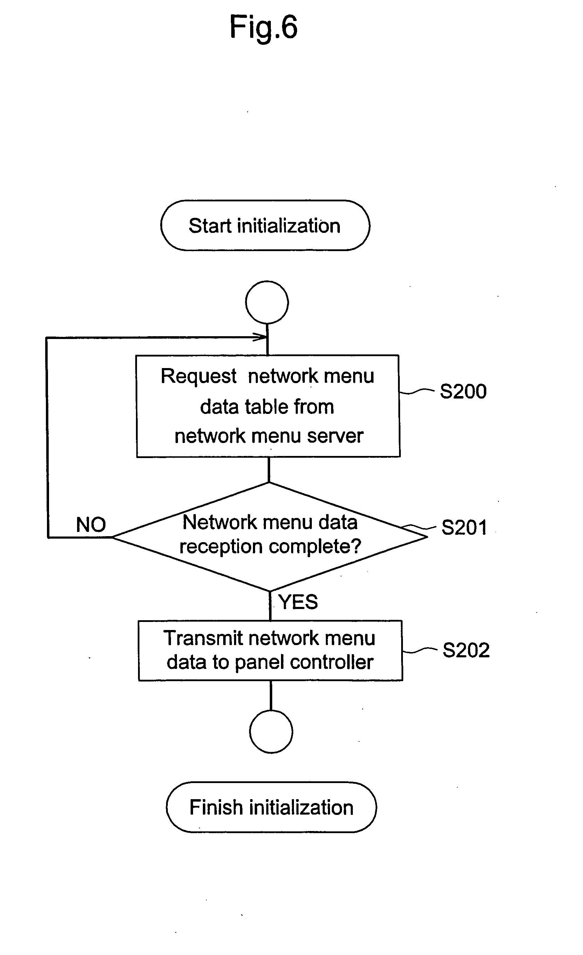

Multifunction apparatus 100 executes a process of displaying the network menu on panel 204, according to a flowchart of Fig. 6. In particular, network menu controller 222 requests a network menu data table from network menu server 102 (S200).

At the network menu server 102 side, upon receiving the request for the network menu data table from multifunction apparatus 100, network menu information processor 303 retrieves a corresponding network menu data table 302 from hard disk 301 and transmits the table to multifunction apparatus 100 (requester).

At the multifunction apparatus 100 side, upon receiving the menu data table from network menu server 102 (S201), the menu data is transmitted to panel controller 214 and the network menu is displayed on panel 204 (S202).

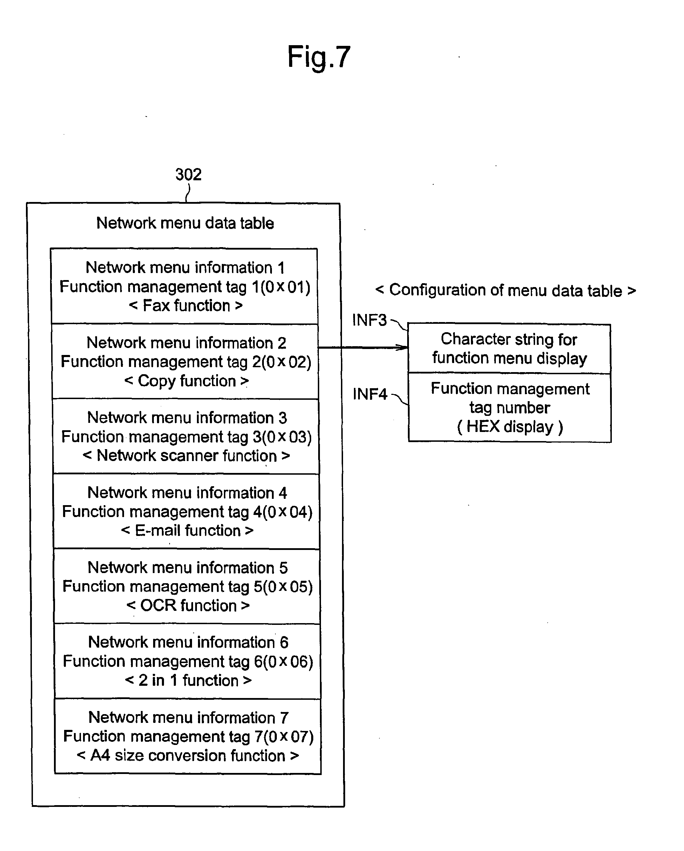

Fig. 7 illustrates an exemplary configuration of network menu data table 302. In this example, network menu data table 302 registers network menu information related to functions provided in multifunction apparatus 100 (fax/copier/network scanner/e-mail functions) as well as functions provided by coordination of both multifunction apparatus 100 and network menu server 102 (OCR/2-in-1/A4 size conversion functions). As shown in Fig. 7, network menu information for each function includes character string for menu display INF3 and function management tag number INF4. Function management tag number INF4 is the same as function management tag number INF1, which is registered in apparatus function management table 223 of Fig. 5.

The network menu data registered in network menu data table 302 is data to be displayed on panel 204 of multifunction apparatus 100. Character string for menu display INF3 illustrates a character string to be displayed on panel 204.

The following describes an initialization process at the network menu server 102 side.

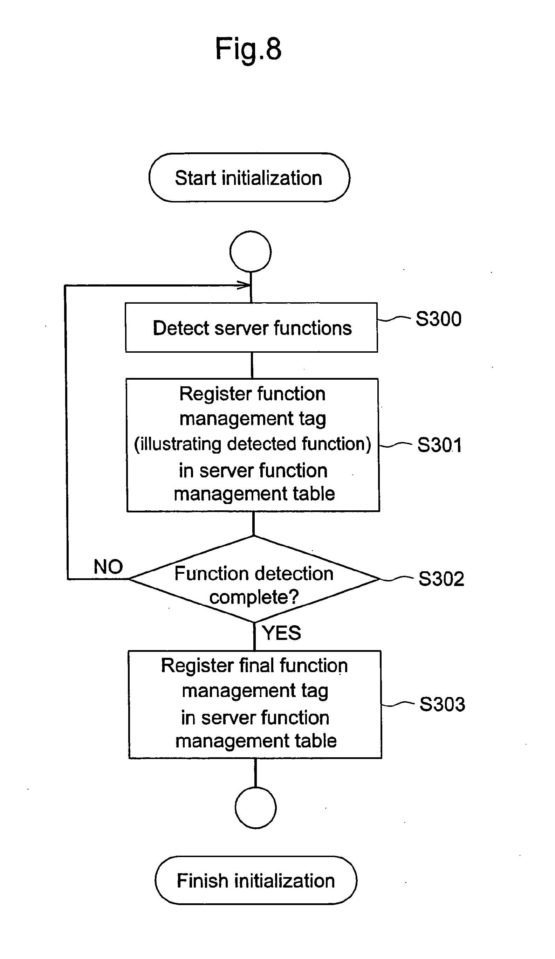

According to the flowchart of Fig. 8, network menu server 102 executes a process to register support functions of network menu server 102 in server function management table 309. First, server function management controller 308 checks capability processors 303, 304, 305, and 306 individually and detects the functions provided in the server (S300). The detected server functions are registered in server function management table 309 (S301). In particular, the function management tags for the detected server functions and other information are registered in server function management table 309. When all server functions are registered (S302), the final function management tag is registered at the end of server function management table 309 (S303), and the initialization process is completed.

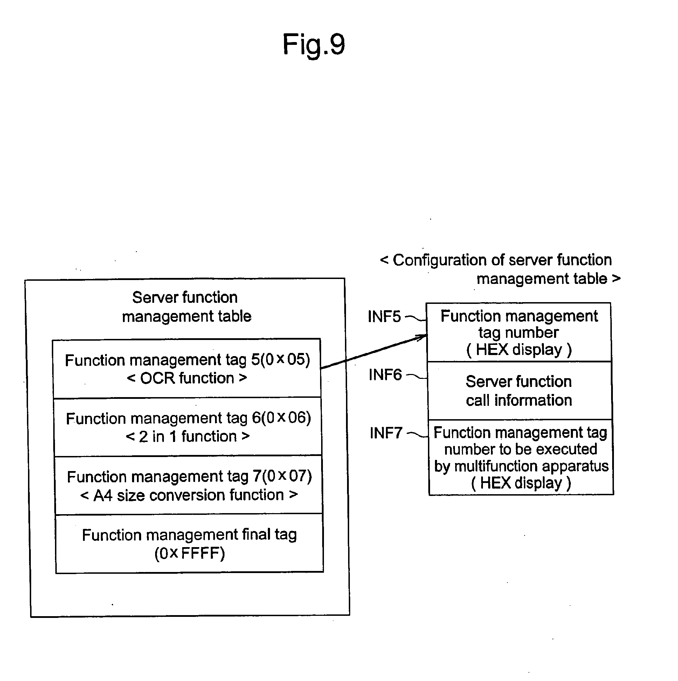

Fig. 9 illustrates a exemplary configuration of server function management table 309. As shown in Fig. 9, the initialization process of Fig. 8 has registered the OCR, 2-in-1, and A4 size conversion functions. In addition, as shown in Fig. 9, function management tag number INF5, server function call information INF6, function management tag number INF7 (executed by multifunction apparatus 100) are registered for each function.

Function management tag number INF5 is an identification number applied to each server function. The tag number is the same as function management tag number INF4, which is registered in network menu data table 302.

Server function call information INF6 is information to execute the corresponding function. When function is provided as a mathematical function, the function is configured with a mathematical function address. When the function is provided as a task, the function is configured with a task number and a function execution startup command. The data format of server function call information INF6 is dependent on how the functions are provided in network menu server 102. Therefore, other format can be used for function call information INF6 in the invention.

Function management tag number INF7 (executed by multifunction apparatus 100) is a management tag number of a function that needs to be executed by multifunction apparatus 100, when a function execution request is made from multifunction apparatus 100 to network menu server 102. In particular, server functions include a function (OCR function) that is available in coordination with a function installed to multifunction apparatus 100 (e.g., network scanner function) and a function installed to network menu server 102 (e.g., OCR function). When such a function execution request is made, the function executed by multifunction apparatus 100 needs to be included. Therefore, function management tag number INF7 (executed by multifunction apparatus 100) is registered.

The following describes operations when a function is selected from multifunction apparatus 100.

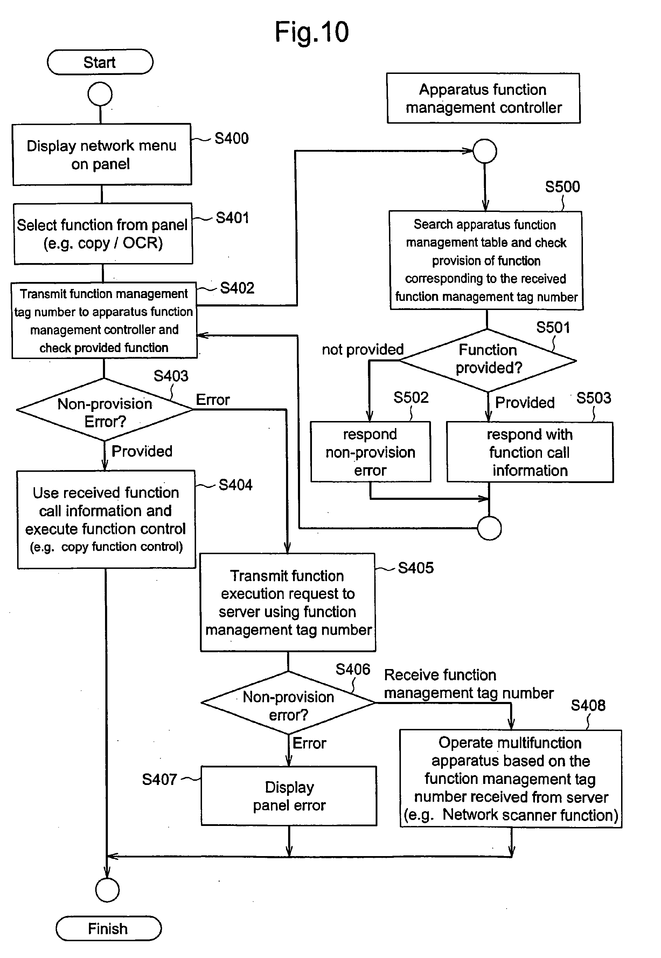

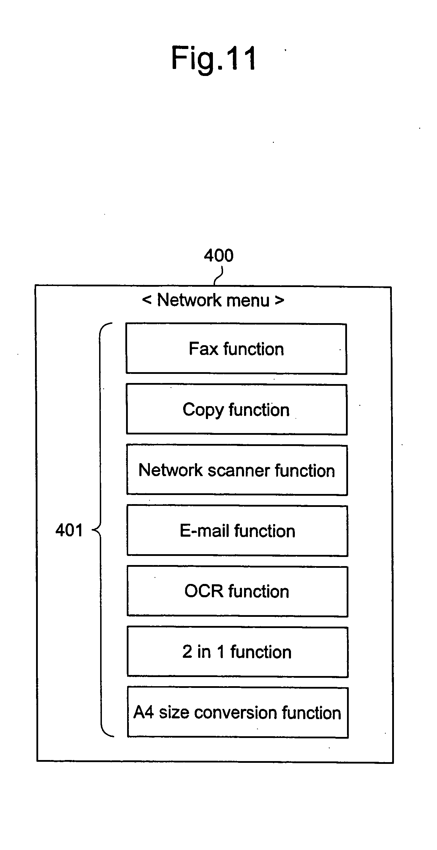

Fig. 10 is a flowchart illustrating panel controller 214 of multifunction apparatus 100. According to the flowchart of Fig. 6, panel controller 214 receives network menu data from network menu controller 222. Then, a network menu is displayed on a display screen of panel 204, using the network menu data (S400). Fig. 11 illustrates an example of the network menu displayed based on network menu data table 302 of Fig. 7. Display screen 400 of panel 204 displays all function names 401, which are registered in network menu data table 302. Display screen 400 of panel 204 has a touch sensor that detects a pressing operation. Further, function name 401 displayed on display screen 400 includes a selection button.

The user presses one of function names 401 displayed on display screen 400 of panel 204. Panel controller 214 recognizes the selected function from the pressed location on display screen 400 (S401). Then, "function management tag number INF4" related to the selected function is obtained from the network menu data. By specifying "function management tag number INF4", the query for the existence of the function is made at apparatus function management controller 221 (S402).

Upon receiving "function management tag number INF4" from panel controller 214, apparatus function management controller 221 searches apparatus function management table 223 for "function management tag number INF4" (S500). When "function management tag number INF1", which is identical with "function management tag number INF4" is registered in apparatus function management table 223, it means that the selected function is provided in multifunction apparatus 100. When not registered, the selected function is not provided in multifunction apparatus 100.

Apparatus function management controller 221 determines whether the function is provided based on the search result (S501). When not provided, "non-provision error" is transmitted to panel controller 214 (S502). When provided, "function call information INF2", which is also registered together with "function management tag number INF1", is retrieved and transmitted to panel controller 214 (S503).

Panel controller 214 checks whether the selected function is provided based on the response from apparatus function management controller 221 (S403). When it is determined that the selected function is provided (S403), the corresponding function controller (program) is executed based on the received "function call information INF2" (S404). For example, when the fax function provided in multifunction apparatus 100 is selected, fax function controller 225 is initiated.

When it is determined that the selected function is not provided in multifunction apparatus 100 at step S403, an operation for providing the selected function in coordination with network menu server 102 is started. Panel controller 214 specifies "function management tag number INF1" related to the selected function and enables network menu controller 222 to transmit a function execution request to network menu server 102 (S405).

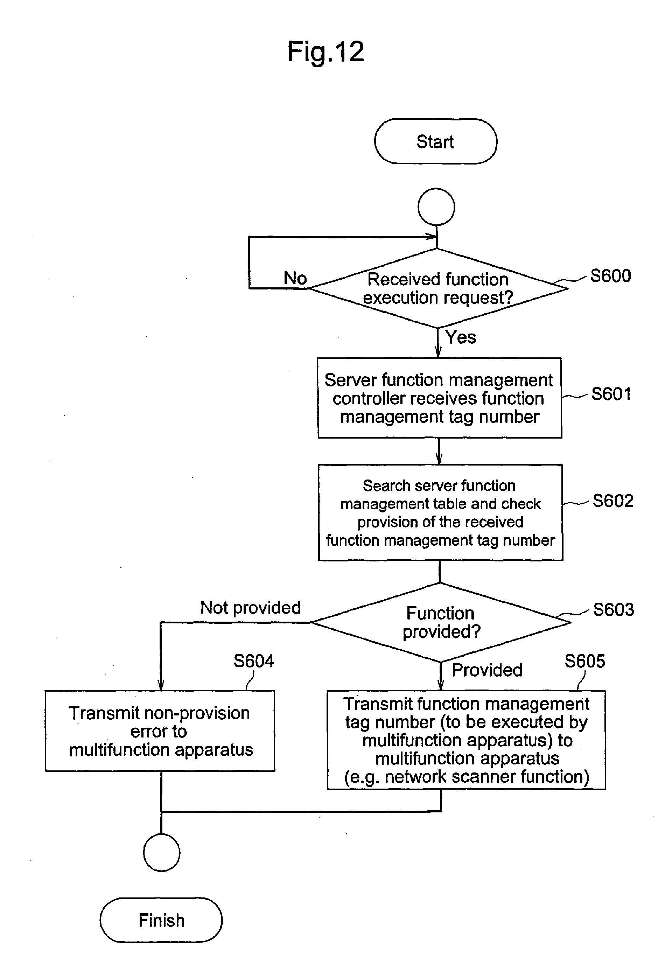

At network menu server 102 side, server function management controller 308 receives the function execution request, as shown in Fig. 12 (S600). Server function management controller 308 receives "function management tag number INF1" related to the selected function (S601), and searches server function management table 309 to check whether a function corresponding to "function management tag number INF1" is provided in network menu server 102 (S602). When server function management table 309 has "function management tag number INF5", which has the same number as "function management tag number INF1", the selected function is provided in network menu server 102.

Upon searching server function management table 309 and determining that the corresponding function is not provided (S603), "non-provision error" is transmitted to multifunction apparatus 100 (requester) (S604). When it is determined that the corresponding function is provided (S603), "function management tag number INF7", which is related to the function (to be executed by multifunction apparatus 100) is transmitted to multifunction apparatus 100 (requester) (S605).

The following illustration uses an example where the OCR function is selected at step S401 (Fig. 10) at multifunction apparatus 100. In this example, the "OCR function" is a function that becomes available by coordination of both the network scanner function of multifunction apparatus 100 and the OCR function (OCR capability processor 304) of network menu server 102. As shown in Fig. 9, server function management table 309 registers "function management tag number INF7" for the "network scanner function", in association with "function management tag number INF5" for "OCR function". Accordingly, server function management controller 308 retrieves "function management tag number INF7" for the network scanner function (in association with "function management tag number INF5" for "OCR function") from server function management table 309, and responds to multifunction apparatus 100.

AT step S406 of Fig. 10, multifunction apparatus 100 makes a determination based on the response from network menu server 102. In particular, when the response from network menu server 102 is "non-provision error", the error message is displayed on panel 204 (S407). When "function management tag number INF7" is transmitted as the response, multifunction apparatus 100 is operated based on "function management tag number INF7" (S408). At step S408, panel controller 214 controls the display operation of the information necessary for executing the function, the function corresponding to "function management tag number INF7" on multifunction apparatus 100. Other processes are executed by corresponding function controllers (225 - 228).

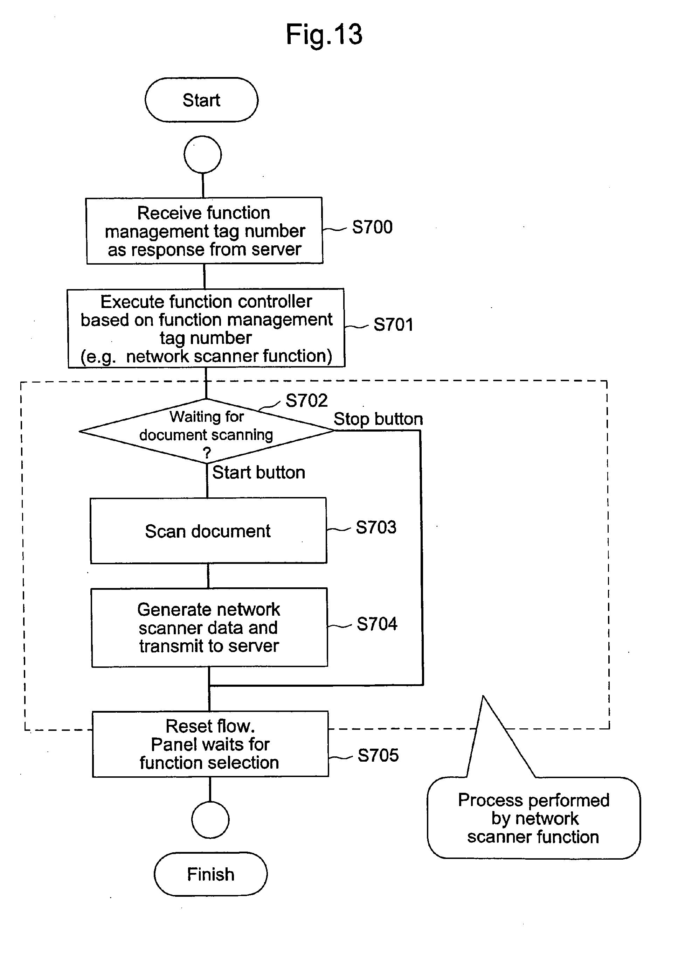

Fig. 13 illustrates an example of an operation after multifunction apparatus 100 receives "function management tag number INF7". Fig. 13 illustrates an example where "function management tag number INF7" is the network scanner function. Upon receiving "function management tag number INF7" as a response from network menu server 102 (S700), CPU 220 initiates the function controller that corresponds to "function management tag number INF7" (S701). For example, when "function management tag number INF7" is the received response, apparatus function management controller 221 obtains function call information INF2 from apparatus function management table 223, and notifies CPU 220. Then, CPU 220 initiates the corresponding controller using function call information INF2.

When network scanner function controller 227 is initiated, the apparatus waits for the document scanning (S702). When the start button is pressed, scanner 207 is operated to scan the document (S703). The scanned document image data is stored in image memory 219. When the scanning operation is completed, the network scanner data is generated and transmitted to network menu server 102 (S704). The network scanner data includes additional information such as a function management tag number, an attribute, etc.

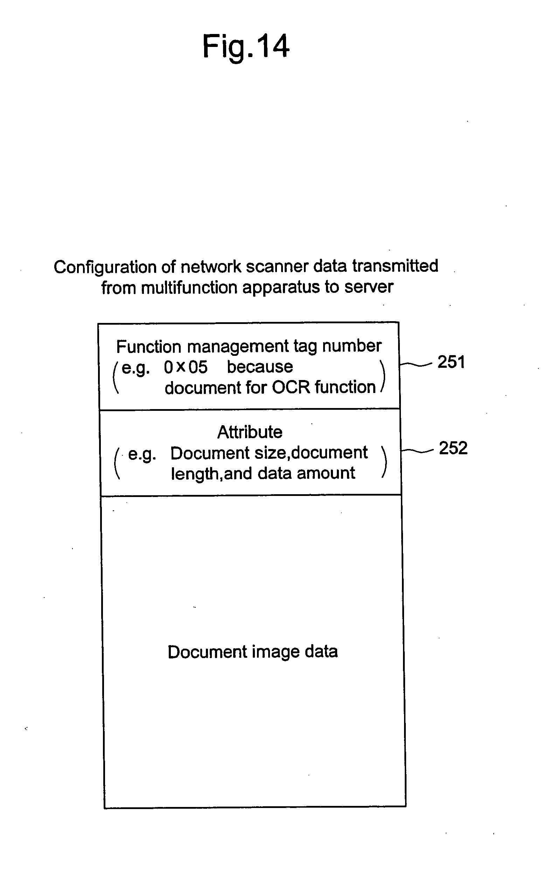

Fig. 14 illustrates a data configuration of the scanner data transmitted from multifunction apparatus 100 to network menu server 102. As shown in Fig. 14, function management tag number 251 and attribute 252 are added at the top of the document image data. Function management tag number 251 is the number of the function selected at step S401 (Fig. 10). In this embodiment, function management tag number = 0 x 05 is applied to the OCR function of Fig. 9. Attribute 252 includes document size, document length, and data amount.

When the above process is completed, the control goes back to step S400 of Fig. 10 and waits for function selection from panel 204 (S705).

Upon returning a response at step S605 (Fig. 12), network menu server 102 waits for data reception from multifunction apparatus 100.

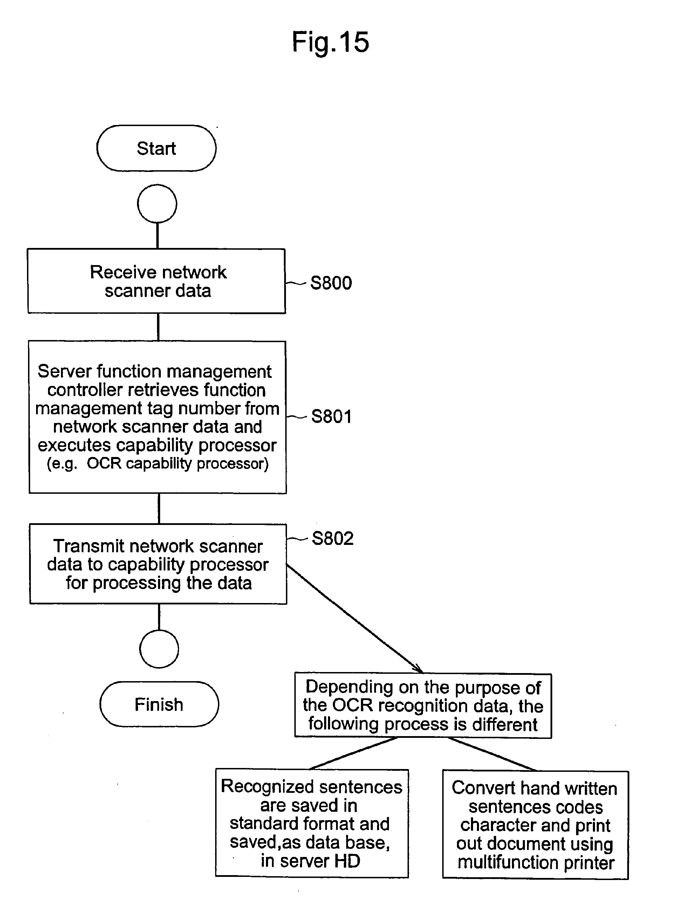

Fig. 15 is a flowchart illustrating the operation of network menu server 102 after receiving the network scanner data. Upon receiving the network scanner data from multifunction apparatus 100 (S800), server function management controller 308 retrieves function management tag number 251 from the network scanner data in order to execute a necessary capability processor (S801). Since function management tag number 251 specifies the OCR function in this example, OCR capability processor 304 is initiated, and the attribute and document image data are delivered (S802). Upon performing the character recognition of the document image data by referring to the attribute, OCR capability processor 304 performs a predetermined process using the character recognition data. For example, when a process of storing the character recognition data in hard disk 301 is specified, the character recognition data is stored in hard disk 301, in a predetermined standard format. When a process of printing out the character recognition data is specified, the image data is converted into character codes and transmitted to multifunction apparatus 100. Then, printer 202 of multifunction apparatus 100 prints out the document.

According to the present embodiment, network menu server 102 stores network menu data table 3 02 that registers functions provided in multifunction apparatus 100 and functions provided by coordination of both multifunction apparatus 100 and network menu server 102. A menu can be displayed on panel 204 of multifunction apparatus 100, according to network menu data table 302. Therefore, a function that is not provided in multifunction apparatus 100 can be selected and executed when the function is displayed in a menu.

In the above illustration, multifunction apparatus 100 is used. However, the present invention can be applied to other non-multifunction apparatuses.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

This application is based on the Japanese Patent Application No. 2004-003398 filed on January 8, 2004, entire content of which is expressly incorporated by reference herein.

## Claims

1. A multifunction apparatus comprising:
a plurality of function execution units each performing one of a plurality of functions;
a menu obtaining unit that obtains a network menu, the network menu being used for selecting a function from a server, the network menu including a function provided in the multifunction apparatus and a function provided in the server;
a panel that displays the obtained network menu;
a determination unit that determines whether a function selected from the displayed menu is provided in the multifunction apparatus; and
an execution requester that transmits an operation command to one of said function execution units when it is determined that the function is provided, and transmits a function execution request to the server when the function is not provided.

2. The multifunction apparatus according to claim 1, wherein when the server transmits function identification information as a response to the function execution request, one of said function execution units specified by the function identification information is given an operation command, and data is added to the function identification information of the selected function and transmitted to the server, the data being obtained as a result of the operation of the function execution unit.

3. A menu execution method for executing a function using one of a multifunction apparatus and a server, by selecting the function from a menu from the multifunction apparatus, the method comprising:
obtaining a network menu that includes functions of the multifunction apparatus and functions of the server, the menu being used to select a function from the server;
displaying the obtained menu on a panel of the multifunction apparatus;
determining whether a function selected from the displayed menu is provided in the multifunction apparatus;
executing the selected function by the multifunction apparatus when the function is provided; and
transmitting a function execution request to the server when the function is not provided.

4. A menu execution method comprising:
transmitting a request for a menu from a multifunction apparatus to a server;
transmitting a network menu as a response to the request from the server, the network menu including functions of the multifunction apparatus and functions of the server;
displaying the network menu on a panel at the multifunction apparatus when the multifunction apparatus receives the network menu;
selecting a function from the panel of the multifunction apparatus;
executing the selected function by the multifunction apparatus when the function is provided in the multifunction apparatus; and
executing the selected function by coordination of both the server and the multifunction apparatus when the function is provided in the server.
